# FASCICULE DE BREVET EUROPEEN

(11) **EP 2 045 857 B1**
(45) Date de publication et mention de la délivrance du brevet: **24.07.2013**
(21) Numéro de dépôt: 08290869.0
(22) Date de dépôt: 16.09.2008
(51) Int. Cl.: H01M 4/32, H01M 4/62, H01M 10/30, H01M 10/42

(54) **Electrode positive pour générateur électrochimique à électrolyte alcalin**
Positive Elektrode für elektrochemischen Generator mit alkalischem Elektrolyt
Positive electrode for an electrochemical generator with an alkaline electrolyte

(30) Priorité: 05.10.2007 FR 0706991
(43) Date de publication de la demande: 08.04.2009
(73) Titulaire: SAFT, 93170 Bagnolet (FR)
(72) Inventeur: Bernard, Patrick, 33000 Bordeaux (FR); Goubault, Lionel, 33360 Carigan de Bordeau (FR); Guiader, Olivier, 33520 Bruges (FR)
(74) Mandataire: Hirsch & Associés

(56) Documents cités:
- EP-A- 1 610 403
- WO-A-99/00861
- FR-A- 1 447 754
- JP-A- 2004 296 360
- US-A1- 2003 104 277
- US-A1- 2005 244 713

## Description

### DOMAINE TECHNIQUE

L'invention a pour objet un générateur électrochimique à électrolyte alcalin présentant une dégradation réduite des performances à fort régime de décharge.

### ETAT DE LA TECHNIQUE

Les électrodes positives et négatives non-frittées (encore appelées empâtées) des générateurs électrochimiques à électrolyte alcalin contiennent des composés organiques tels que des épaississants, des dispersants, des élastomères ou des adhésifs qui sont indispensables pour leur fabrication. D'autres composés carbonés sont également utilisés par exemple pour le séparateur. Celui-ci peut être un non-tissé en polypropylène, en polyéthylène ou en polyamide parfois greffé par des fonctions acryliques. Du carbone peut être utilisé comme percolant de l'électrode négative.

Les composés carbonés utilisés dans les générateurs électrochimiques à électrolyte alcalin (en particulier ceux contenus dans l'électrode positive) sont susceptibles de s'oxyder au contact de l'électrode positive. La réaction d'oxydation de ces composés dans une solution basique peut être décrite par l'équation :

CₓH_{y}O_{z} + (6x+y-2z)OH⁻ → ₓCO₃²⁻+ (3x+y-z)H₂O + (4x+y-2z)e⁻

La formation d'ions carbonates selon la réaction précédente réduit la conductivité ionique de l'électrolyte. Il s'ensuit une dégradation des performances du générateur électrochimique à fort régime de décharge (performances en puissance). On entend par fort régime de décharge, une décharge à un courant supérieur ou égal à Ic Ampères, où Ic est le courant nécessaire pour décharger la capacité nominale C du générateur en 1h.

On recherche donc un générateur électrochimique à électrolyte alcalin présentant une dégradation réduite des performances à fort régime de décharge.

Le document JP 08-329937 décrit l'ajout d'une poudre d'hydroxyde de strontium Sr(OH)₂ ou de carbonate de strontium SrCO₃ dans l'électrode positive d'un générateur électrochimique à électrolyte alcalin.

Le document JP 2003-249222 décrit l'ajout d'un composé de type oxyde de strontium SrO ou d'hydroxyde de strontium Sr(OH)₂ dans l'électrode positive d'un générateur électrochimique à électrolyte alcalin.

Le document EP-A-1006598 décrit l'utilisation d'un dépôt d'un composé de type oxyde ou hydroxyde de strontium sur une électrode positive de technologie frittée afin d'améliorer les propriétés de charge de l'électrode à température élevée.

Le document EP-A-0587974 décrit l'utilisation d'hydroxyde de strontium en poudre dans l'électrode positive ou en solution solide dans l'hydroxyde de nickel pour augmenter la surtension de dégagement d'oxygène et améliorer les propriétés de charge de l'électrode positive.

Le document US 2003/129491 propose l'ajout d'oxyde ou d'hydroxyde de strontium dans l'électrode positive.

Le document US 6740449 mentionne l'utilisation d'un hydroxyde de nickel dont la surface est recouverte d'une couche d'hydroxyde de strontium ou l'utilisation d'un hydroxyde de nickel contenant en solution solide de l'hydroxyde de strontium.

Le document EP-A-1610403 décrit l'ajout d'un composé de strontium ou de baryum dans un générateur électrochimique à électrolyte alcalin à l'exception de la cathode (électrode positive).

Le document JP 2004-296360 divulgue un générateur électrochimique secondaire à électrolyte alcalin comprenant au moins une électrode négative et au moins une électrode positive, ladite électrode positive comprenant une pâte comprenant une matière électrochimiquement active qui est un hydroxyde à base de nickel dont les particules sont enrobées d'une couche de sulfate de strontium, un liant, la proportion pondérale de sulfate de strontium allant de 0,5 à 5 % en poids par rapport à l'hydroxyde de nickel. La couche de sulfate de strontium est obtenue par un procédé comprenant les étapes suivantes :
a) la préparation d'un mélange comprenant de l'hydroxyde de nickel, un sel de strontium soluble dans l'eau, tel qu'un nitrate, et un agent complexant tel que l'EDTA ;
b) l'addition d'une solution aqueuse de sulfate de sodium au mélange de l'étape a).
L'étape a) entraîne la formation d'un complexe entre le strontium et l'agent complexant. Dans l'étape b), l'addition d'une solution aqueuse de sulfate de sodium entraine la précipitation de sulfate de strontium autour de la surface des particules d'hydroxyde de nickel.

Le document US 2003/0104277 divulgue un générateur électrochimique alcalin de type nickel hydrure métallique, nickel cadmium ou nickel zinc dans lequel l'électrode positive à base d'un hydroxyde de nickel dont les particules sont enrobées d'hydroxyde de titane.

Le document WO 99/00861 divulgue un générateur électrochimique secondaire à électrolyte alcalin comprenant au moins une électrode négative au zinc et au moins une électrode positive, ladite électrode positive comprenant une pâte comprenant une matière électrochimiquement active comprenant du dioxyde de manganèse et du sulfate de strontium, la proportion pondérale de sulfate de strontium dans ladite pâte est comprise entre environ 1% et environ 15% du poids de l'électrode positive.

Le document US 2005/0244713 divulgue un générateur électrochimique secondaire à électrolyte acide comprenant au moins une électrode négative et au moins une électrode positive, ladite électrode positive comprenant une pâte comprenant une matière électrochimiquement active qui est un alliage de plomb-étain, un liant et du sulfate de strontium SrSO₄, la proportion pondérale de sulfate de strontium dans ladite pâte étant de 0,2%.

Le document FR 1447754 divulgue un générateur électrochimique secondaire à électrolyte acide comprenant au moins une électrode négative et au moins une électrode positive, ladite électrode positive comprenant une pâte comprenant une matière électrochimiquement active qui est du sulfate de plomb et du sulfate de strontium, la proportion pondérale de sulfate de strontium dans ladite pâte étant comprise entre 0,1 et 3% du poids de l'électrode positive.

Les six premiers documents cités ci-avant décrivent l'utilisation dans l'électrode positive, d'un composé de strontium exclusivement sous forme d'oxyde, d'hydroxyde ou de carbonate. L'utilisation de tels composés permet d'améliorer les propriétés de charge à chaud de l'électrode positive. Les solutions proposées par les documents précédemment cités ne permettent pas de réduire la dégradation des performances en décharge du générateur à fort régime de décharge.

Par conséquent, on recherche un générateur électrochimique à électrolyte alcalin présentant une dégradation réduite des performances en décharge à fort régime de décharge.

### RESUME DE L'INVENTION

A cet effet, l'invention propose un générateur électrochimique à électrolyte alcalin de type nickel-cadmium, nickel-métal hydrure ou nickel-zinc comprenant au moins une électrode négative et au moins une électrode positive, ladite électrode positive comprenant une pâte obtenue en mélangeant une matière électrochimiquement active, un liant, un composé conducteur et du sulfate de strontium SrSO₄ et de l'eau, la proportion pondérale de sulfate de strontium dans ladite pâte étant supérieure à 0, 1 % et inférieure ou égale à 10%.

Selon un mode de réalisation, la proportion de sulfate de strontium est supérieure ou égale à 0,5%.

Selon un mode de réalisation, la proportion de sulfate de strontium est supérieure ou égale à 2%.

Selon un mode de réalisation, la proportion de sulfate de strontium est supérieure ou égale à 4%.

Selon un mode de réalisation, la proportion de sulfate de strontium est inférieure ou égale à 8%.

Selon un mode de réalisation, la pâte contient au moins un composé choisi parmi les composés du zinc, de l'yttrium, de l'ytterbium et du calcium.

L'invention concerne également l'utilisation de sulfate de strontium dans la fabrication d'une électrode positive d'un générateur électrochimique à électrolyte alcalin de type nickel-cadmium, nickel-métal hydrure ou nickel-zinc, pour réduire la dégradation de la capacité en décharge du générateur à un régime de décharge supérieur ou égal à I_{C}, la proportion pondérale de sulfate de strontium dans ladite pâte étant supérieure à 0,1% et inférieure ou égale à 10%.

### EXPOSE DETAILLE DE MODES DE REALISATION DE L'INVENTION

L'invention repose sur l'utilisation de sulfate de strontium dans l'électrode positive. Sans vouloir être lié par la théorie, la Demanderesse pense que l'ajout de sulfate de strontium a pour effet d'éliminer les ions carbonates de l'électrolyte, selon la réaction suivante :

SrSO₄ + K₂CO₃ → SrCO₃ + K₂SO₄

L'élimination des ions carbonates permet d'améliorer les performances en puissance du générateur.

Les oxydes et hydroxydes de strontium, dont l'utilisation dans un générateur électrochimique est connue de l'art antérieur, sont très réactifs avec le dioxyde de carbone CO₂ contenu dans l'air. Ils se transforment donc très rapidement en carbonate de strontium, dès la préparation de l'électrode. Les formes oxydes, hydroxydes ou carbonates sont par conséquent inefficaces pour éliminer les ions carbonates formés dans le générateur électrochimique. Pour pallier le problème de la forte réactivité des oxydes et des hydroxydes de strontium avec le dioxyde de carbone contenu dans l'air, il est nécessaire d'effectuer toutes les étapes de la fabrication du générateur sous atmosphère inerte. Une telle solution conduit à un surcoût important dans la fabrication de l'électrode. L'invention permet d'éliminer les ions carbonates de l'électrolyte et ne nécessite pas de travailler sous atmosphère contrôlée.

Le mode de préparation du générateur selon l'invention va maintenant être décrit en détail. De manière classique, on prépare une pâte comprenant la matière électrochimiquement active positive, un liant, un composé conducteur et du sulfate de strontium SrSO₄, la proportion pondérale de sulfate de strontium dans ladite pâte étant supérieure à 0, 1 % et inférieure ou égale à 10%.

La pâte est obtenue en mélangeant la matière électrochimiquement active positive avec le liant, le composé conducteur, le sulfate de strontium SrSO₄ et de l'eau.

Lorsque la proportion pondérale de sulfate de strontium est inférieure ou égale à 0, 1 %, elle est insuffisante pour améliorer la capacité du générateur électrochimique à fort régime de décharge.

Lorsque la proportion pondérale de sulfate de strontium est supérieure ou égale à 10%, les performances électriques diminuent. Il est probable que l'ajout d'une quantité trop importante de sulfate de strontium, qui est un produit isolant, perturbe le fonctionnement électrochimique de la matière électrochimiquement active.

La matière électrochimiquement active positive peut être un hydroxyde à base de nickel. On entend par "hydroxyde à base de nickel" un hydroxyde de nickel, un hydroxyde contenant principalement du nickel, mais également un hydroxyde de nickel contenant au moins un hydroxyde syncristallisé d'un élément choisi parmi le zinc (Zn), le cadmium (Cd), le magnésium (Mg) et l'aluminium (Al), et au moins un hydroxyde syncristallisé d'un élément choisi parmi le cobalt (Co), le manganèse (Mn), l'aluminium (Al), l'yttrium (Y), le calcium (Ca), le zirconium (Zr), le cuivre (Cu). Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel.

L'hydroxyde de nickel peut être de façon préférentielle recouvert par un revêtement à base d'hydroxyde de cobalt éventuellement partiellement oxydé, ou associé à un composé conducteur, constitué principalement de Co(OH)₂. D'autres composés tels que Co, CoO, LiₓCoO₂, NaₓCoO₂, HₓCoO₂, CoₓO₄, poudres métalliques, carbones peuvent être utilisés comme composé conducteur.

Le liant peut être choisi parmi la carboxyméthylcellulose (CMC), l'hydroxyéthylcellulose (HEC), l'hydroxypropyl-méthylcellulose (HPMC) l'hydroxypropylcellulose (HPC), un polyacideacrylate PAAc, une gomme xanthane, un copolymère de styrène et de butadiène (SBR) éventuellement carboxylé, un copolymère d'acrylonitrile et de butadiène (NBR), un copolymère de styrène, d'éthylène, de butylène et de styrène (SEBS), un terpolymère de styrène, de butadiène et de vinylpyridine (SBVR), le polyamide (PA), un polyéthylène (PE), un copolymère de type éthylène-vinyle acétate (EVA), un polymère à fonction acrylate de type polyacrylate, styrène-acrylate, styrène-maléique anhydride, un polytétrafluoroéthylène (PTFE), un copolymère fluoré d'éthylène et de propylène (FEP), le polyhexafluoropropylène (PPHF), et le perfluorométhylvinylether (PMVE).

Selon un mode préféré de réalisation, on utilise un mélange de PTFE et de CMC.

Ladite pâte peut contenir en outre au moins un autre composé choisi parmi les composés du zinc comme ZnO ou Zn(OH)₂, de l'yttrium comme Y₂O₃ ou Y(OH)₃, de l'ytterbium comme Yb₂O₃ ou Yb(OH)₃ et du calcium comme CaO, Ca(OH)₂ ou CaF₂. Ce composé est habituellement ajouté sous forme pulvérulente.

Selon un mode de réalisation, des fibres conductrices ou non conductrices peuvent être rajoutées dans l'électrode. De préférence, la quantité de fibres ajoutées est inférieure à 1,5%. De préférence, il s'agira de fibres polymères de polypropylène par exemple, de diamètre compris entre 10 et 35 µm et de longueur inférieure à 2 mm.

On dépose la pâte sur un support collecteur de courant. Le collecteur de courant peut être un support conducteur bidimensionnel, comme un feuillard plein ou perforé, un métal déployé, une grille ou un tissu, ou un support conducteur tridimensionnel poreux comme un feutre ou une mousse. Ce support peut être à base de métal ou de carbone. L'électrode obtenue est de type non-frittée encore appelée empâtée.

On prépare ensuite au moins une électrode négative. On forme un faisceau électrochimique en superposant au moins une électrode positive selon l'invention, un séparateur et une électrode négative.

Le séparateur est généralement composé de fibres en polyoléfine (par ex. polypropylène) ou polyamide poreux non-tissé.

On insère le faisceau électrochimique dans un conteneur. On remplit le conteneur d'un électrolyte alcalin qui est une solution alcaline aqueuse qui peut comprendre un mélange de bases fortes tel que l'hydroxyde de potassium KOH, l'hydroxyde de sodium NaOH et d'hydroxyde de lithium LiOH, pour constituer le générateur électrochimique.

L'invention s'applique à tout montage d'électrodes.

Le générateur peut être de type bouton, cylindrique (avec un bobineau ou un enroulement en spirale) ou prismatique.

Le générateur électrochimique selon l'invention est un générateur électrochimique à électrolyte alcalin, comme par exemple les générateurs contenant les couples nickel-métal hydrurable, nickel-cadmium, nickel-fer, nickel-zinc, nickel-hydrogène.

### EXEMPLES

L'électrode positive de référence P1, préparée à partir d'une pâte humide contenant 20 % d'eau, présente la composition pondérale suivante :

| | |
|---|---|
| Mousse de nickel | 4,00 g/dm² |
| Matière électrochimiquement active | 16,0 g/dm² |
| Matériau conducteur Co(OH)₂ | 1,8 g/dm² |
| Liant PTFE | 0,18 g/dm² |
| Polymère cellulosique CMC | 0,05 g/dm² |

La matière électrochimiquement active pulvérulente est constituée d'un hydroxyde à base de nickel et contient les additifs syncristallisés suivants : cobalt et zinc. La viscosité de la pâte est ajustée avec de l'eau. La pâte est introduite dans un support conducteur tridimensionnel qui est une mousse de nickel de porosité d'environ 95 %. Une fois la pâte introduite dans le support, l'ensemble est séché afin d'en éliminer l'eau, laminé puis découpé pour obtenir l'électrode aux dimensions désirées. L'électrode finie, présente une porosité de 30 % et un grammage de 18 g/dm² de matière enduite.

L'électrode positive P2, préparée à partir d'une pâte humide contenant 20 % d'eau, présente la composition pondérale suivante :

| | |
|---|---|
| Mousse de nickel | 5,0 g/dm² |
| Matière électrochimiquement active | 16,0 g/dm² |
| SrSO₄ | 0,02 g/dm² (0, 1%) |
| Matériau conducteur Co(OH)₂ | 1,8 g/dm² |
| Liant PTFE | 0,18 g/dm² |
| Polymère cellulosique CMC | 0,05 g/dm² |

La matière électrochimiquement active pulvérulente est constituée d'un hydroxyde à base de nickel et contient les additifs syncristallisés suivants : cobalt et zinc. Le procédé de fabrication de l'électrode P2 est identique à celui de l'électrode positive de référence P1. L'électrode finie présente une porosité de 29,9 % et un grammage de 18,1 g/dm² de matière.

L'électrode positive P3, préparée à partir d'une pâte humide contenant 20% d'eau, présente la composition pondérale suivante :

| | |
|---|---|
| Mousse de nickel | 5,00 g/dm² |
| Matière électrochimiquement active | 16,00 g/dm² |
| SrSO₄ | 0,4 g/dm²(2 %) |
| Matériau conducteur Co(OH)₂ | 1,8 g/dm² |
| Liant PTFE | 0,2 g/dm² |
| Polymère cellulosique CMC | 0,05 g/dm² |

La matière électrochimiquement active pulvérulente est constituée d'un hydroxyde à base de nickel et contient les additifs syncristallisés suivants : cobalt et zinc. Le procédé de fabrication de l'électrode P3 est identique à celui de l'électrode positive de référence P1. L'électrode finie présente une porosité de 28,0 % et un grammage de 18,4 g/dm² de matière.

L'électrode positive P4, préparée à partir d'une pâte humide contenant 20 % d'eau, présente la composition pondérale suivante :

| | |
|---|---|
| Mousse de nickel | 5,0 g/dm² |
| Matière électrochimiquement active | 16,0 g/dm² |
| SrSO₄ | 0,8 g/dm²(4%) |
| Matériau conducteur Co(OH)₂ | 1,8 g/dm² |
| Liant PTFE | 0,18 g/dm² |
| Polymère cellulosique CMC | 0,05 g/dm² |

La matière électrochimiquement active pulvérulente est constituée d'un hydroxyde à base de nickel et contient les additifs syncristallisés suivants : cobalt et zinc. Le procédé de fabrication de l'électrode P4 est identique à celui de l'électrode positive de référence P1. L'électrode finie présente une porosité de 25,8 % et un grammage de 18,8 g/dm² de matière.

L'électrode positive P5 préparée à partir d'une pâte humide contenant 20 % d'eau, présente la composition pondérale suivante :

| | |
|---|---|
| Mousse de nickel | 5 g/dm² |
| Matière électrochimiquement active | 16 g/dm² |
| SrSO₄ | 2,1 g/dm²(10%) |
| Matériau conducteur Co(OH)₂ | 1,8 g/dm² |
| Liant PTFE | 0,18 g/dm² |
| Polymère cellulosique CMC | 0,05 g/dm² |

La matière électrochimiquement active pulvérulente est constituée d'un hydroxyde à base de nickel et contient les additifs syncristallisés suivants : cobalt et zinc. Le procédé de fabrication de l'électrode P5 est identique à celui de l'électrode positive de référence P1. L'électrode finie présente une porosité de 19,5 % et un grammage de 20,1 g/dm² de matière.

L'électrode positive P6 préparée à partir d'une pâte humide contenant 20 % d'eau, présente la composition pondérale suivante :

| | |
|---|---|
| Mousse de nickel | 5,0 g/dm² |
| Matière électrochimiquement active | 16,0 g/dm² |
| Sr(OH)₂ | 8 g/dm²(4%) |
| Matériau conducteur Co(OH)₂ | 1,8 g/dm² |
| Liant PTFE | 0,18 g/dm² |
| Polymère cellulosique CMC | 0,05 g/dm² |

La matière électrochimiquement active pulvérulente est constituée d'un hydroxyde à base de nickel et contient les additifs syncristallisés suivants : cobalt et zinc. Le procédé de fabrication de l'électrode est identique à celui de l'électrode positive de référence P1. L'électrode finie présente une porosité de 25,8% et un grammage de 18,8 g/dm² de matière.

L'électrode négative de référence N1 est réalisée avec une pâte ayant comme composition pondérale (exprimée en % par rapport au poids de la pâte) :

| | |
|---|---|
| Matière électrochimiquement active | 80,0% |
| Liant : SBR | 0,5% |
| Carbone | 0,3% |
| Epaississant | 0,2% |
| Eau : | 19,0% |

La matière électrochimiquement active est un composé intermétallique capable de former un hydrure une fois chargé. La viscosité de la pâte est ajustée avec de l'eau. La pâte est introduite dans le support conducteur qui est une mousse de nickel. L'ensemble est ensuite séché afin d'en éliminer l'eau, puis laminé à une porosité de 25% pour obtenir l'électrode. La capacité de l'électrode négative est supérieure à celle de l'électrode positive.

L'électrode négative N2 est réalisée avec une pâte ayant comme composition pondérale (exprimée en % par rapport au poids de la pâte) :

| | |
|---|---|
| Matière électrochimiquement active | 80,0% |
| SrSO₄ | 3,8% |
| Liant : SBR | 0,5% |
| Carbone | 0,3% |
| Epaississant | 0,2% |
| Eau : | 19,0% |

La matière électrochimiquement active est un composé intermétallique capable de former un hydrure une fois chargée. La viscosité de la pâte est ajustée avec de l'eau. La pâte est introduite dans le support conducteur qui est une mousse de nickel. L'ensemble est ensuite séché afin d'en éliminer l'eau, puis laminé à une porosité de 25% pour obtenir l'électrode. La capacité de l'électrode négative est supérieure à celle de l'électrode positive.

Un générateur électrochimique secondaire étanche NiMH de format AA et dont la capacité nominale C est de 1200mAh est constitué d'une électrode positive et d'une électrode négative décrites ci-dessus. Les électrodes sont séparées par un séparateur non-tissé de polypropylène pour former le faisceau électrochimique. Le faisceau ainsi spiralé est inséré dans un godet métallique (ou conteneur) et imprégné d'un électrolyte alcalin qui est une solution alcaline aqueuse constituée d'un mélange d'hydroxyde de potassium KOH 7,5N, d'hydroxyde de sodium NaOH 0,4N et d'hydroxyde de lithium LiOH 0,5N pour constituer le générateur.

**Tableau 1**

| Série | Electrode positive | Electrode négative |
|---|---|---|
| A* | P1 | N1 |
| B* | P2 | N1 |
| C | P3 | N1 |
| D | P4 | N1 |
| E | P5 | N1 |
| F* | P6 | N1 |
| G* | P1 | N2 |

| | | |
|---|---|---|
| * Exemples comparatifs | | |

### Performances électrochimiques

Après un repos de 48h à température ambiante, les générateurs subissent ensuite une dizaine de cycles lents.
Cycle 1 :
   Charge à 0,025Ic pendant 3h, où Ic est le courant nécessaire pour décharger la capacité nominale C du générateur en 1 h,
   Charge 3h à 0,33Ic,
   Décharge à 0,2Ic jusqu'à une tension de 1V.
Cycles 2 à 10 :
   Charge 16h à 0,1Ic,
   Décharge à 0,2Ic jusqu'à une tension de 1V.
Cycle 11 :
   Charge 72 minutes à Ic,
   Décharge à Ic jusqu'à une tension de 1V.
Cycle 12 :
   Charge 72 minutes à Ic,
   Décharge à 3Ic jusqu'à une tension de 1V.
Cycle 13 :
   Charge 72 minutes à Ic,
   Décharge à 5Ic jusqu'à une tension de 1V.

**Tableau 2**

| Série | A | B | C | D | E | F | G |
|---|---|---|---|---|---|---|---|
| Capacité déchargée au cycle 10 (mAh) | 1251 | 1256 | 1252 | 1248 | 1247 | 1246 | 1253 |
| Capacité déchargée à Ic au cycle 11 (mAh) | 1201 | 1206 | 1214 | 1223 | 1216 | 1197 | 1203 |
| Capacité déchargée à 3Ic au cycle 12 (mAh) | 1063 | 1068 | 1139 | 1173 | 1153 | 1072 | 1065 |
| Capacité déchargée à 5Ic au cycle 12 (mAh) | 875 | 892 | 1027 | 1123 | 1085 | 898 | 889 |

Les générateurs C, D et E, dont l'électrode positive contient plus de 0,1% de sulfate de strontium, ont une capacité en décharge au régime de 5Ic d'au moins 1027 mAh, alors que les générateurs A et B, dont l'électrode positive contient une proportion pondérale de sulfate de strontium inférieure ou égale à 0, 1 %, présentent une capacité en décharge au même régime de seulement 875 et 892 mAh respectivement. On comprend d'après ces résultats que l'ajout d'une quantité de sulfate de strontium en une proportion pondérale supérieure à 0,1% permet d'améliorer significativement la capacité du générateur à fort régime de décharge. L'ajout d'une quantité de sulfate de strontium supérieure à 10 % perturbe le fonctionnement électrochimique de l'hydroxyde de nickel. En effet le sulfate de strontium est un produit isolant.

D'autre part, la série F montre que l'ajout d'hydroxyde de strontium dans l'électrode positive ne permet pas d'améliorer les performances en puissance, le composé étant probablement déjà totalement transformé en carbonate de strontium avant le remplissage du générateur.

Enfin, la série G montre que l'ajout de sulfate de strontium dans l'électrode négative n'est pas efficace pour améliorer la puissance du générateur. L'élimination des carbonates est en effet plus difficile dans ce cas du fait de l'éloignement du sulfate de strontium par rapport à la source de carbonates provenant de l'électrode positive.

## Revendications

1. Générateur électrochimique à électrolyte alcalin de type nickel-cadmium, nickel-métal hydrure ou nickel-zinc comprenant au moins une électrode négative et au moins une électrode positive, ladite électrode positive comprenant une pâte obtenue en mélangeant une matière électrochimiquement active, un liant, un composé conducteur, du sulfate de strontium SrSO₄ et de l'eau, la proportion pondérale de sulfate de strontium dans ladite pâte étant supérieure à 0,1% et inférieure ou égale à 10%.

2. Générateur selon la revendication 1, dans lequel la proportion de sulfate de strontium est supérieure ou égale à 0,5%.

3. Générateur selon la revendication 1 ou 2, dans lequel la proportion de sulfate de strontium est supérieure ou égale à 2%.

4. Générateur selon l'une des revendications 1, 2 ou 3, dans lequel la proportion de sulfate de strontium est supérieure ou égale à 4%.

5. Générateur selon l'une des revendications précédentes, dans lequel la proportion de sulfate de strontium est inférieure ou égale à 8%.

6. Générateur selon l'une des revendications précédentes, dans lequel la pâte contient au moins un composé choisi parmi les composés du zinc, de l'yttrium, de l'ytterbium et du calcium.

7. Utilisation de sulfate de strontium dans la fabrication d'une pâte pour électrode positive d'un générateur électrochimique à électrolyte alcalin de type nickel-cadmium, nickel-métal hydrure ou nickel-zinc, pour réduire la dégradation de la capacité en décharge du générateur à un régime de décharge supérieur ou égal à I_{C}, où I_{C} est le courant nécessaire pour décharger la capacité nominale C du générateur en une heure, la proportion pondérale de sulfate de strontium dans ladite pâte étant supérieure à 0,1% et inférieure ou égale à 10%.

## Patentansprüche

1. Elektrochemischer Generator mit alkalischem Elektrolyt vom Typ Nickel-Cadmium, Nickel-Metallhydrid oder Nickel-Zink, der wenigstens eine negative Elektrode und wenigstens eine positive Elektrode umfasst, wobei die positive Elektrode eine Paste umfasst, die erhalten wird durch Mischen eines elektrochemisch aktiven Materials, eines Bindemittels, einer leitenden Verbindung, von Strontiumsulfat SrSO₄ und von Wasser, wobei der Gewichtsanteil von Strontiumsulfat in der Paste größer als 0,1 % und kleiner oder gleich 10 % ist.

2. Generator nach Anspruch 1, wobei der Gewichtsanteil von Strontiumsulfat größer oder gleich 0,5 % ist.

3. Generator nach Anspruch 1 oder 2, wobei der Gewichtsanteil von Strontiumsulfat größer oder gleich 2 % ist.

4. Generator nach einem der Ansprüche 1, 2 oder 3, wobei der Gewichtsanteil von Strontiumsulfat größer oder gleich 4 % ist.

5. Generator nach einem der vorherigen Ansprüche, wobei der Gewichtsanteil von Strontiumsulfat kleiner oder gleich 8 % ist.

6. Generator nach einem der vorherigen Ansprüche, wobei die Paste wenigstens eine Verbindung enthält, die ausgewählt ist aus den Verbindungen von Zink, von Yttrium, von Ytterbium und von Calcium.

7. Verwendung von Strontiumsulfat bei der Herstellung einer Paste fiir die positive Elektrode eines elektrochemischen Generators mit alkalischem Elektrolyt vom Typ Nickel-Cadmium, Nickel-Metallhydrid oder Nickel-Zink, zum Vermindern des Abbaus der Entladungskapazität des Generators auf eine Entladerate, die größer oder gleich I_{c} ist, wobei I_{c} die zum Entladen der Nennkapazität C des Generators in einer Stunde erforderliche Stromstärke ist, wobei der Gewichtsanteil von Strontiumsulfat in der Paste größer als 0,1 % und kleiner oder gleich 10 % ist.

## Claims

1. An alkaline electrolyte electrochemical cell of the Nickel-Cadmium, Nickel-Metal hydride, or Nickel-Zinc type comprising at least one negative electrode and at least one positive electrode, said positive electrode comprising a paste obtained by mixing an electrochemically active material, a binder, a conductive compound, strontium sulphate SrSO₄ and water, the proportion by weight of strontium sulphate in said paste being greater than 0.1% and less than or equal to 10%.

2. Cell according to claim 1, in which the proportion of strontium sulphate is greater than or equal to 0.5%.

3. Cell according to claim 1 or 2, in which the proportion of strontium sulphate is greater than or equal to 2%.

4. Cell according to one of claims 1, 2 or 3, in which the proportion of strontium sulphate is greater than or equal to 4%.

5. Cell according to one of the preceding claims, in which the proportion of strontium sulphate is less than or equal to 8%.

6. Cell according to one of the preceding claims, in which the paste contains at least one compound chosen from the compounds of zinc, yttrium, ytterbium and calcium.

7. Use of strontium sulphate in the manufacture of a paste for a positive electrode of an alkaline electrolyte electrochemical cell of the Nickel-Cadmium, Nickel-Metal hydride, or Nickel-Zinc type in order to reduce the deterioration in the discharge capacity of the cell at a discharge rate greater than or equal to I_{c}, the proportion by weight of strontium sulphate in said paste being greater than 0.1% and less than or equal to 10%.
